# EUROPEAN PATENT SPECIFICATION

(11) **EP 3 482 926 B1**
(45) Date of publication and mention of the grant of the patent: **22.09.2021**
(21) Application number: 18205250.6
(22) Date of filing: 08.11.2018
(51) Int. Cl.: B32B 3/26, B32B 3/30, B32B 5/02, B32B 27/12, B32B 27/32, B32B 27/36, B32B 27/40, B32B 7/08, B32B 7/05

(54) **COMPOSITE CLOTH**
COMPOSITE-GEWEBE
TISSU COMPOSITE

(30) Priority: 10.11.2017 TW 106138922
(43) Date of publication of application: 15.05.2019
(73) Proprietor: Huang, Chen-Cheng, Taipey City 10595 (TW); Huang, Pao-Han, Taipei City 10595 (TW); Huang, Pao-Hao, Taipei City 10595 (TW)
(72) Inventor: Huang, Chen-Cheng, Taipey City 10595 (TW); Huang, Pao-Han, Taipei City 10595 (TW); Huang, Pao-Hao, Taipei City 10595 (TW)
(74) Representative: Roberts, David

(56) References cited:
- EP-A1- 3 179 835
- US-A1- 2011 223 388
- US-A1- 2014 363 625

## Description

The disclosure relates to a composite cloth, and more particularly to a composite cloth including at least one functional film.

A functional cloth having a predetermined function, such as waterproof, cool-feeling, anti-ultraviolet, etc., has been widely developed in recent years based on wearing requirements. One conventional method for making the functional cloth involves soaking a fabric sheet in a liquid substance containing functional components so as to bond the functional components and the fabric sheet. However, the functional components bonded to the fabric sheet will be in contact with a wearer's skin when the functional cloth is worn, which may result in an adverse effect on the wearer's health. Furthermore, the fabric sheet of the functional cloth may have poor durability due to the soaking method. Another conventional method for making the functional cloth involves coating the functional components on a surface of the fabric sheet. However, the functional components cannot be evenly distributed on the surface of the fabric sheet due to irregularity of the surface thereof, and the coated functional components may easily peel off from the fabric sheet and thus fail to function effectively.

Therefore, an object of the disclosure is to provide a composite cloth that can alleviate at least one of the drawbacks of the prior art.

US2014/363625A1 discloses a breathable and waterproof composite fabric that includes a fabric sheet having opposite first and second surfaces and defining a plurality of micropores extending therethrough.

US2011/223388 A1 discloses an article that includes a film and a non-woven having fibers, and an embossed seal joining a portion of the film and the non-woven. The seal includes discrete extended elements formed in the film and surrounded by lands in the film. The discrete extended elements having open proximal ends, open or closed distal ends, and sidewalls disposed between the proximal and distal ends, and portions of the discrete extended elements having a thickness less than that of the lands. Fibers of the non-woven are embedded in at least one of the lands and in the sidewalls of the discrete extended elements through the open proximal ends.

According to the disclosure, a composite cloth is provided according to the appended claims.

The following description details embodiments of the invention according to the claims and also describes background examples which are outside of the scope of the claimed invention.

Other features and advantages of the disclosure will become apparent in the following detailed description of the embodiments with reference to the accompanying drawings, of which:
FIG. 1 is a fragmentary exploded perspective view illustrating a first example of a composite cloth;
FIG. 2 is a fragmentary cross-sectional view illustrating the first example;
FIG. 3 is a fragmentary cross-sectional view illustrating a first embodiment of the composite cloth according to the disclosure;
FIG. 4 is a fragmentary exploded perspective view illustrating a second example of a composite cloth;
FIG. 5 is a fragmentary cross-sectional view illustrating the second example; and
FIG. 6 is a back view illustrating a second embodiment of the composite cloth according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

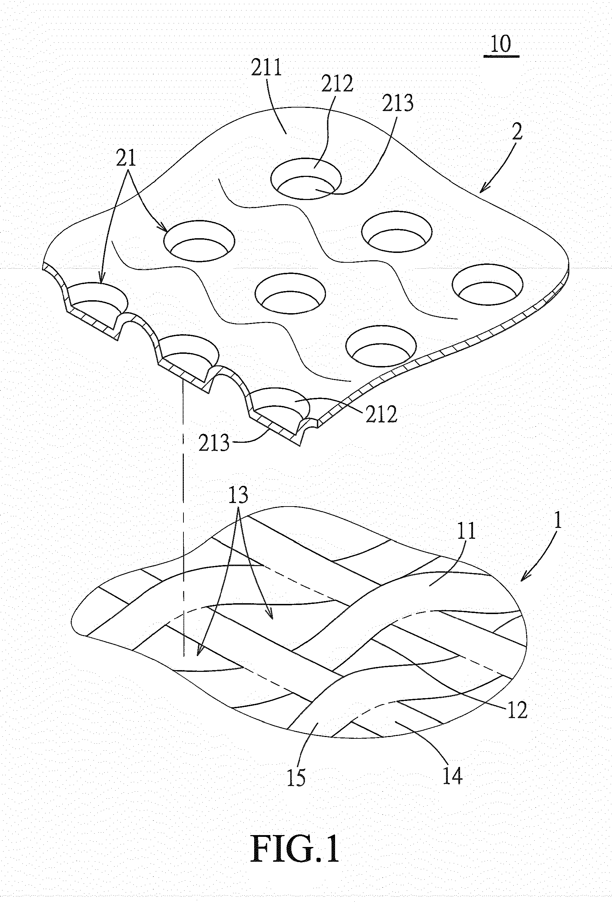

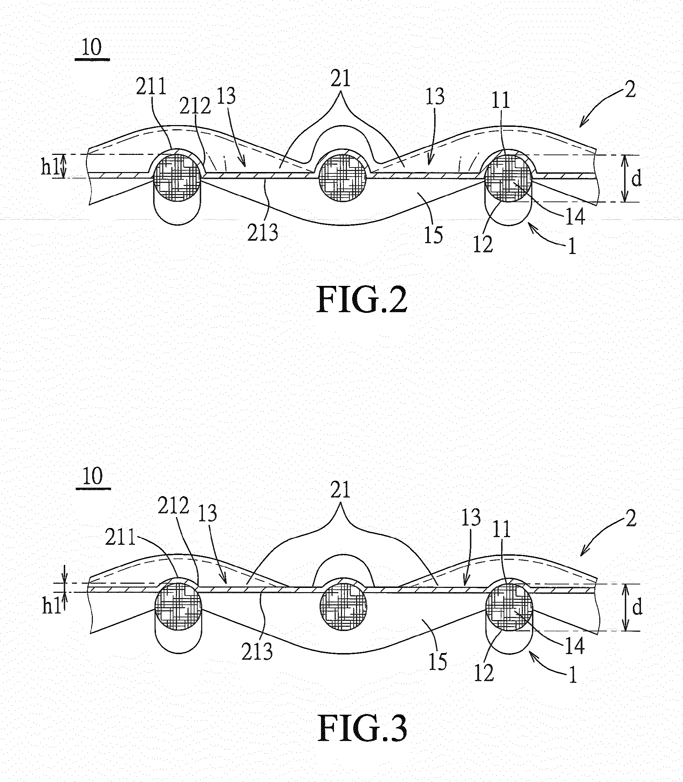

Referring to FIGS. 1 and 2, a first example of a composite cloth 10 includes a fabric sheet 1 and at least one functional film 2. In this example, the composite cloth 10 is exemplified to include one functional film 2.

The fabric sheet 1 has opposite first and second surfaces 11, 12 and defines a plurality of micropores 13 that extend through the first and second surfaces 11, 12. The fabric sheet 1 may be made of a woven fabric, a nonwoven fabric or other suitable fabrics. In this example, the fabric sheet 1 is made of the woven fabric and includes a plurality of warp yarns 14 and a plurality of weft yarns 15 interlaced with each other to define the micropores 13 thereamong.

In one form, the fabric sheet 1 has a multilayered structure.

The functional film 2 is bonded to the first surface 11 of the fabric sheet 1, conforms the first surface 11 of the fabric sheet 1, and is formed with a plurality of vacuum-molded protrusions 21 extending into corresponding ones of the micropores 13. The functional film 2 has at least one functional component for providing a desired function. The functional film 2 may be made from a thermoplastic base material mixed with the functional component, and the thermoplastic base material may be selected from polyolefin, polyester, and a thermoplastic elastomer. In this example, the thermoplastic base material of the functional film 2 is made from polyurethane elastomer. In one form, the functional component is not limited to be coated on a surface of the functional film 2.

More specifically, the functional film 2 includes a fabric-sheet binding portion 211 bonded to the first surface 11 of the fabric sheet 1, and a plurality of protrusion-forming portions 212 connected to the fabric-sheet binding portion 211 and respectively defining the vacuum-molded protrusions 21. Each of the vacuum-molded protrusions 21 has a closed end 213 distal to the first surface 11 of the fabric sheet 1.

The functional component of the functional film 2 may be selected from: an anti-ultraviolet (UV) component; a waterproof component; a vapor-permeable component, such as polyethylene oxide-modified polyurethane dispersion (PEO-modified PUD); an antistatic component; a water-repellent component, such as Teflon® textile finishes and Teflon® Fabric Protectors available from DuPont; a cooling component, such as such as erythritol and xylitol; an electromagnetic wave-shielding component, such as aluminum-containing phenolformaldehyde resin; and combinations thereof. The selection of the functional component of the functional film 2 is based on practical requirements. The functional film 2 may have a plurality of the functional components, such that the functional film 2 has a plurality of the predetermined functions corresponding to the functional components.

To be specific, the first example of the composite cloth 10 may be produced by disposing a raw functional film on the fabric sheet 1 with the micropores 13; placing the fabric sheet 1 and the raw functional film over a screen mold (not shown); heating the fabric sheet 1 and the raw functional film to soften the raw functional film; vacuum-forming the softened raw functional film with a suction force to form the functional film 2 provided with the vacuum-molded protrusions 21 extending into corresponding ones of the micropores 13, and melt-bonding the functional film 2 to the fabric sheet 1 so as to form the composite cloth 10; cooling the composite cloth 10; and releasing the composite cloth 10 from the screen mold. By way of the vacuum-molding techniques, the functional film 2 is entirely covered on the fabric sheet 1, and hardly peels off from the fabric sheet 1.

As shown in FIG. 2, each of the vacuum-molded protrusions 21 of the functional film 2 has a first height (h1) measured from the closed end 213 to the fabric-sheet binding portion 211. The first height (h1) of each of the vacuum-molded protrusions 21 is no less than half of a minimum distance (d) between the first and the second surfaces 11, 12 of the fabric sheet 1. Therefore, the closed ends 213 of the vacuum-molded protrusions 21 of the functional film 2, which are the closest areas of the functional film 2 to a wearer's skin, are isolatable from the wearer's skin.

Referring to FIG. 3, a first embodiment of the composite cloth 10 according to the disclosure is illustrated. The first embodiment of the composite cloth 10 has a structure similar to that of the first example, except that the first height (h1) of each of the vacuum-molded protrusions 21 of the functional film 2 is adjusted to be less than that of the first example, i.e., the height (h1) of each of the vacuum-molded protrusions 21 is less than half of the minimum distance (d) between the first and the second surfaces 11, 12 of the fabric sheet 1. Hence, a distance between the second surface 12 and the closed end 213 of each of the vacuum-molded protrusions 21 is larger than that of the first example. Therefore, the functional film 2 is further isolated from the wearer's skin.

The first embodiment of the composite cloth 10 may be made in a manner similar to that of the first example, except that the suction force applied to the raw functional film and the fabric sheet 1 is controlled to be smaller than the suction force applied for making the first example. Hence, the first height (h1) of the vacuum-molded protrusions 21 is adjustable to be less than that of the first example.

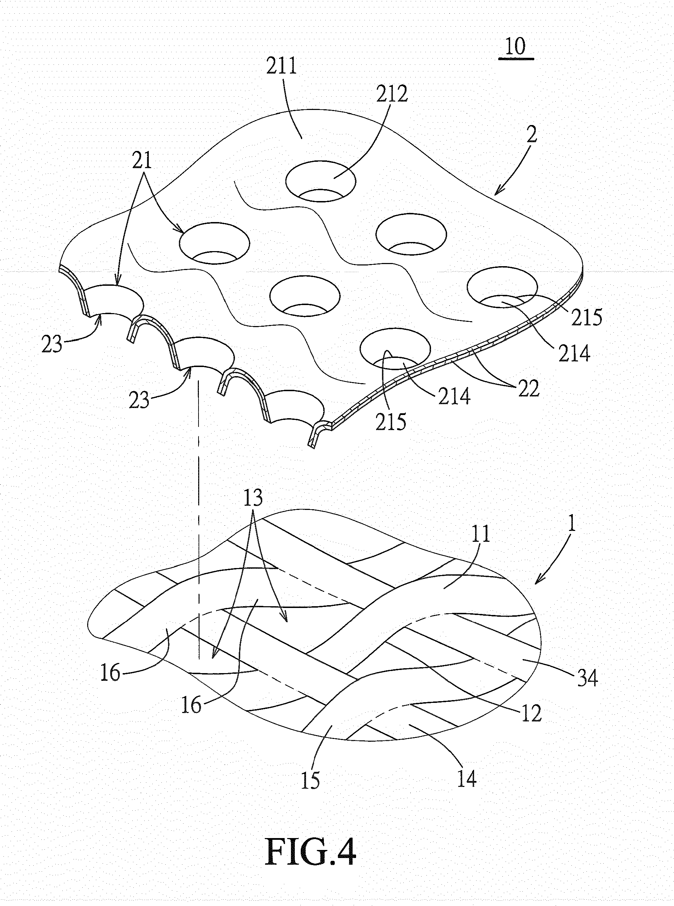

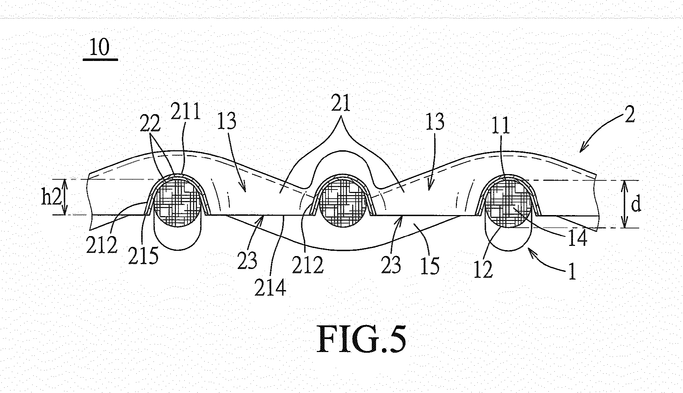

Referring to FIGS. 4 and 5, a second example of the composite cloth 10 is illustrated. The functional film 2 may include a plurality of functional layers 22 and a plurality of the functional components. Each of the functional layers 22 may have one or more of the functional components so that the functional film 2 is multi-functional. In this example, the functional film 2 includes two of the functional layers 22 that are stacked on each other and that include two different ones of the functional components, respectively, such as the anti-ultraviolet component and the water-repellent component.

In this example, each of the vacuum-molded protrusions 21 has an open end 214 distal to the first surface 11 of said fabric sheet 1. Each of the vacuum-molded protrusions 21 of the functional film 2 has a second height (h2) measured from a peripheral edge 215 surrounding the open end 214 to the fabric-sheet binding portion 211. The second height (h2) is greater than half of a minimum distance (d) between the first and second surfaces 11, 12 and less than the minimum distance (d) between the first and second surfaces 11, 12.

In this example, the second height (h2) of each of the vacuum-molded protrusions 21 is increased, and a contact area between the fabric 1 and the functional film 2 is increased accordingly. Therefore, bonding strength between the functional film 2 and the fabric sheet 1 is further enhanced, and peeling of the functional film 2 from the fabric sheet 1 due to an external force can be avoided.

The second example of the composite cloth 10 can be made in a manner similar to that of the first example, except that the suction force applied to the raw functional film and the fabric sheet 1 is controlled to be greater than that applied for making the first example. The open end 214 of each of the vacuum-molded protrusions 21 defines an opening 23 extending through the first and second surfaces 11, 12 of the fabric sheet 1 so as to improve vapor permeability of the composite cloth 10.

Alternatively, each of the vacuum-molded protrusions 21 of the second example may be formed with a closed end 213 as with the first example and the first embodiments, and the closed end 213 of each of the vacuum-molded protrusions 21 of the first example and first embodiment may be replaced with an open end 214 that defines an opening.

By controlling the suction force used in vacuum-molding for making the molded-vacuum protrusions 21, the first and second heights (h1, h2) of the vacuum-molded protrusions 21 are adjustable according to various requirements. When the first height (h1) is relatively small, i.e. the vacuum-molded protrusions 21 is relatively distal to the second surface 12, the vacuum-molded protrusions 21 will be isolated from the wearer's skin with a greater extent. With a precondition of isolating the functional film 2 from the wearer's skin, when the second height (h2) is relatively large, the contact area between the fabric sheet 1 and the protrusion-forming portion 212 of each of the vacuum-molded protrusions 21 is relatively increased, and the bonding strength between the functional film 2 and the fabric sheet 1 will be enhanced accordingly.

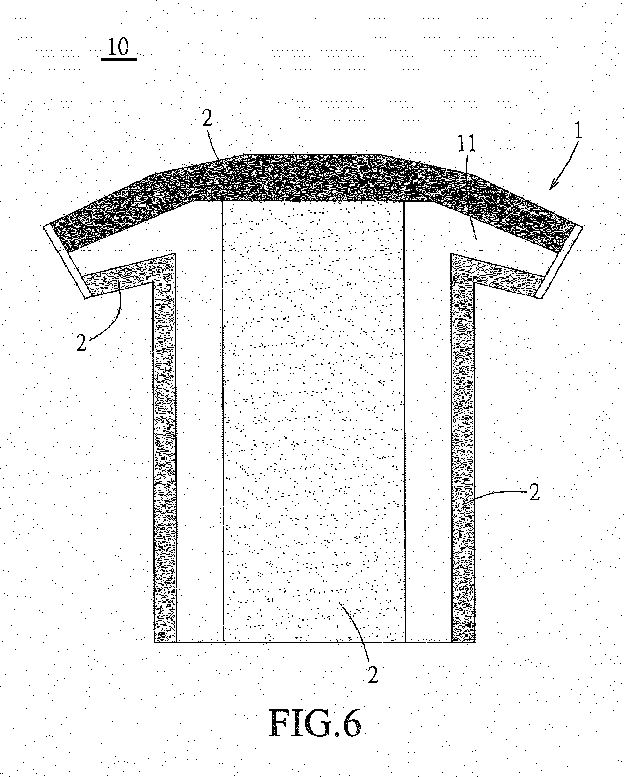

Referring to FIG. 6, a second embodiment of the composite cloth 10 according to the disclosure is illustrated. The composite cloth 10 is formed into a top clothing (only the back side thereof is shown). In this embodiment, the at least one functional film 2 is exemplified to include a plurality of the functional films 2 that are independently bonded to the first surface 11 of the fabric sheet 1. The first surface 11 of the fabric sheet 1 is an outer surface of the top clothing, and the second surface 12 of the fabric sheet 1 is an inner surface (not shown) of the top clothing. In this embodiment, four of the functional films 2 that are independently bonded to the fabric sheet 1 respectively have different ones of the above mentioned functional components. Hence, the top clothing has four different functional regions respectively corresponding in position to the four functional films 2. To be specific, the functional component included in one of the functional films 2 that is located at the shoulder part of the top clothing is the anti-ultraviolet component. The functional component included in another one of the functional films 2 that is located at the back part of the top clothing is the cooling component. The other two of the functional films 2 are respectively located at the sleeve regions of the top clothing, which respectively covers the wearer's arms from the armpits to the wrists or elbows. The other two functional films 2 include the vapor-permeable component. By way of designing the functional films 2 to be respectively placed at the different regions of the composite cloth 10, the composite cloth 10 has multiple functional regions that corresponding position to the different body parts of the wearer.

To sum up, by virtue of the structural design of the vacuum-molded protrusions 21 of the least one functional film 2 being bonded to the fabric sheet 1, the at least one functional film 2 including one or more of the functional component will not be in contact with the wearer's skin when the composite cloth 10 is worn. The composite cloth is made breathable with the openings 23 of the at least one functional film 2 corresponding in position to the micropores 13 of the fabric sheet 1. Furthermore, the position and number of the functional films 2 and the number of the functional layers 22 of each of the functional films 2 may be adjusted based on actual use so that the composite cloth 10 has multi-functional properties.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A composite cloth (10) including a fabric sheet (1) that has opposite first and second surfaces (11, 12), said composite cloth (10) being **characterized by**:
said fabric sheet (1) defining a plurality of micropores (13) extending through said first and second surfaces (11, 12); and
at least one functional film (2) that is bonded to said first surface (11) of said fabric sheet (1), that conforms said first surface (11) of said fabric sheet (1) and that is formed with a plurality of vacuum-molded protrusions (21) extending into corresponding ones of said micropores (13),
wherein said at least one functional film (2) has at least one functional component,
wherein said at least one functional film (2) includes a fabric-sheet binding portion (211) bonded to said first surface (11) of said fabric sheet (1), and a plurality of protrusion-forming portions (212) connected to said fabric-sheet binding portion (211) and respectively defining said vacuum-molded protrusions (21), each of said vacuum-molded protrusions (21) having a closed end (213) distal to said first surface (11) of said fabric sheet (1), and
wherein each of said vacuum-molded protrusions (21) has a first height (h1) that is measured from said closed end (213) to said fabric-sheet binding portion (211), the first height (h1) being less than half of a minimum distance (d) between said first and second surfaces (11, 12).

2. The composite cloth (10) of claim 1, **characterized in that** said at least one functional film (2) has a plurality of the functional components and a plurality of functional layers (22) that are stacked on top of each other, each of said functional layers (22) having one or more of the functional components.

3. The composite cloth (10) of any one of claims 1 to 2, **characterized in that** said at least one functional film (2) includes a plurality of said functional films (2) that are independently bonded to said first surface (11) of said fabric sheet (1).

4. The composite cloth (10) of any one of claims 1 to 2, **characterized in that** the functional component of said at least one functional film (2) is selected from the group consisting of an anti-ultraviolet (UV) component, a waterproof component, a vapor-permeable component, an antistatic component, a water-repellent component, a cooling component, an electromagnetic wave-shielding component, and combinations thereof.

5. The composite cloth (10) of any one of claims 1 to 4, **characterized in that** said fabric sheet (1) is made of one of a woven fabric and a nonwoven fabric.

6. The composite cloth (10) of claim 5, **characterized in that** said fabric sheet (1) is made of the woven fabric and includes a plurality of warp yarns (14) and a plurality of weft yarns (15) interlaced with each other to define said micropores (13) thereamong.

7. The composite cloth (10) of any one of claims 1 to 2, **characterized in that** said at least one functional film (2) is made from a thermoplastic base material mixed with the functional component, said thermoplastic base material being selected from polyolefin, polyester, and a thermoplastic elastomer.

8. The composite cloth (10) of claim 7, **characterized in that** said thermoplastic base material is made from polyurethane elastomer.

## Patentansprüche

1. Verbundstoff (10) mit einer Stofflage (1), die gegenüberliegende erste und zweite Oberflächen (11, 12) hat, wobei der Verbundstoff (10) **gekennzeichnet ist durch**:
die Stofflage (1), die mehrere Mikroporen (13) definiert, die sich **durch** die ersten und zweiten Oberflächen (11, 12) erstrecken; und
wenigstens eine Funktionsfolie (2), die mit der ersten Oberfläche (11) der Stofflage (1) verbunden ist, die an die erste Oberfläche (11) der Stofflage (1) angepasst ist und die mit mehreren vakuumgeformten Vorsprüngen (21) ausgebildet ist, die in entsprechende der Mikroporen (13) hineinragen,
wobei die wenigstens eine Funktionsfolie (2) mindestens eine Funktionskomponente hat,
wobei die wenigstens eine Funktionsfolie (2) einen Stofflagen-Bindeabschnitt (211), der mit der ersten Oberfläche (11) der Stofflage (1) verbunden ist, und mehrere vorsprungbildende Abschnitte (212), die mit dem Stofflagen-Bindeabschnitt (211) verknüpft sind und jeweils die vakuumgeformten Vorsprünge (21) definieren, enthält, wobei jeder der vakuumgeformten Vorsprünge (21) ein geschlossenes Ende (213) distal zur ersten Oberfläche (11) der Stofflage (1) hat, und
wobei jeder der vakuumgeformten Vorsprünge (21) eine erste Höhe (h1) hat, die vom geschlossenen Ende (213) zum Stofflagen-Bindeabschnitt (211) gemessen ist, wobei die erste Höhe (h1) kleiner als die Hälfte eines minimalen Abstands (d) zwischen den ersten und zweiten Oberflächen (11, 12) ist.

2. Verbundstoff (10) nach Anspruch 1, **dadurch gekennzeichnet, dass** die wenigstens eine Funktionsfolie (2) mehrere Funktionskomponenten und mehrere Funktionsschichten (22), die übereinander gestapelt sind, hat, wobei jede der Funktionsschichten (22) eine oder mehrere der Funktionskomponenten hat.

3. Verbundstoff (10) nach einem der Ansprüche 1 bis 2, **dadurch gekennzeichnet, dass** die wenigstens eine Funktionsfolie (2) mehrere Funktionsfolien (2) enthält, die unabhängig mit der ersten Oberfläche (11) der Stofflage (1) verbunden sind.

4. Verbundstoff (10) nach einem der Ansprüche 1 bis 2, **dadurch gekennzeichnet, dass** die Funktionskomponente der wenigstens einen Funktionsfolie (2) ausgewählt ist aus der Gruppe bestehend aus einer Anti- Ultraviolett (UV)- Komponente, einer Wasserdichtkomponente, einer dampfdurchlässigen Komponente, einer antistatischen Komponente, einer wasserabweisenden Komponente, einer Kühlkomponente, einer elektromagnetische Wellen abschirmenden Komponente und Kombinationen davon.

5. Verbundstoff (10) nach einem der Ansprüche 1 bis 4, **dadurch gekennzeichnet, dass** die Stofflage (1) aus einem Gewebe oder einem Vliesstoff gemacht ist.

6. Verbundstoff (10) nach Anspruch 5, **dadurch gekennzeichnet, dass** die Stofflage (1) aus dem Gewebe gemacht ist und mehrere Kettenfäden (14) und mehrere Schussfäden (15) enthält, die miteinander verflochten sind, um die Mikroporen (13) dazwischen zu definieren.

7. Verbundstoff (10) nach einem der Ansprüche 1 bis 2, **dadurch gekennzeichnet, dass** die wenigstens eine Funktionsfolie (2) aus einem mit der Funktionskomponente vermischten thermoplastischen Basismaterial gemacht ist, wobei das thermoplastische Basismaterial ausgewählt ist aus Polyolefin, Polyester und einem thermoplastischen Elastomer.

8. Verbundstoff (10) nach Anspruch 7, **dadurch gekennzeichnet, dass** das thermoplastische Basismaterial aus Polyurethan-Elastomer gemacht ist.

## Revendications

1. Tissu composite (10) incluant une feuille de tissu (1) qui a des première et deuxième surfaces opposées (11, 12), ledit tissu composite (10) étant **caractérisé par** :
ladite feuille de tissu (1) définissant une pluralité de micropores (13) qui s'étendent à travers lesdites première et deuxième surfaces (11, 12) ; et
au moins un film fonctionnel (2) qui est lié avec ladite première surface (11) de ladite feuille de tissu (1), qui épouse ladite première surface (11) de ladite feuille de tissu (1), et qui est formé d'une pluralité de protubérances moulées sous vide (21) qui s'étendent dans des micropores correspondants parmi lesdits micropores (13),
dans lequel ledit au moins un film fonctionnel (2) a au moins un composant fonctionnel,
dans lequel ledit au moins un film fonctionnel (2) inclut une partie en liaison avec la feuille de tissu (211) qui est liée avec ladite première surface (11) de ladite feuille de tissu (1), et une pluralité de parties formant des protubérances (212) qui sont reliées à ladite partie en liaison avec la feuille de tissu (211) et qui définissent respectivement lesdites protubérances moulées sous vide (21), chacune desdites protubérances moulées sous vide (21) ayant une extrémité fermée (213) qui est distale à ladite première surface (11) de ladite feuille de tissu (1), et
dans lequel chacune desdites protubérances moulées sous vide (21) a une première hauteur (h1) qui est mesurée depuis ladite extrémité fermée (213) jusqu'à ladite partie en liaison avec la feuille de tissu (211), la première hauteur (h1) étant inférieure à la moitié d'une distance minimale (d) entre lesdites première et deuxième surfaces (11, 12).

2. Tissu composite (10) selon la revendication 1, **caractérisé en ce que** ledit au moins un film fonctionnel (2) a une pluralité des composants fonctionnels et une pluralité de couches fonctionnelles (22) qui sont empilées au-dessus de chaque autre, chacune desdites couches fonctionnelles (22) ayant un ou plusieurs des composants fonctionnels.

3. Tissu composite (10) selon l'une quelconque des revendications 1 à 2, **caractérisé en ce que** ledit au moins un film fonctionnel (2) inclut une pluralité desdits films fonctionnels (2) qui sont liés de manière indépendante avec ladite première surface (11) de ladite feuille de tissu (1).

4. Tissu composite (10) selon l'une quelconque des revendications 1 à 2, **caractérisé en ce que** le composant fonctionnel dudit au moins un film fonctionnel (2) est choisi dans le groupe constitué d'un composant anti-ultraviolet (UV), d'un composant étanche, d'un composant perméable à la vapeur, d'un composant antistatique, d'un composant hydrofuge, d'un composant de refroidissement, d'un composant de protection contre les ondes électromagnétiques, et de combinaisons de ces composants.

5. Tissu composite (10) selon l'une quelconque des revendications 1 à 4, **caractérisé en ce que** ladite feuille de tissu (1) est constituée d'un parmi un tissu tissé et un tissu non tissé.

6. Tissu composite (10) selon la revendication 5, **caractérisé en ce que** ladite feuille de tissu (1) est constituée du tissu tissé et inclut une pluralité de fils de chaîne (14) et une pluralité de fils de trame (15) entrelacés les uns aux autres pour définir lesdits micropores (13) entre eux.

7. Tissu composite (10) selon l'une quelconque des revendications 1 à 2, **caractérisé en ce que** ledit au moins un film fonctionnel (2) est fabriqué à partir d'un matériau de base thermoplastique qui est mélangé avec le composant fonctionnel, ledit matériau de base thermoplastique étant choisi parmi la polyoléfine, le polyester, et un élastomère thermoplastique.

8. Tissu composite (10) selon la revendication 7, **caractérisé en ce que** ledit matériau de base thermoplastique est fabriqué à partir d'un élastomère de polyuréthane.
